# EUROPÄISCHE PATENTANMELDUNG

(11) **EP 0 601 272 A1**
(43) Veröffentlichungstag der Anmeldung: **15.06.1994**
(21) Anmeldenummer: 93110246.1
(22) Anmeldetag: 26.06.1993
(51) Int. Cl.: B29C 45/14

(54) **Verfahren zur Herstellung eines Spritzgussteils sowie Vorrichtungen zur Durchführung des Verfahrens**

(30) Priorität: 30.11.1992 CH 3661/92
(71) Anmelder: Schoeller-Plast S.A., CH-1680 Romont (CH)
(72) Erfinder: Umiker, Hans, CH-8132 Egg (CH)
(74) Vertreter: EGLI-EUROPEAN PATENT ATTORNEYS

(57) **Zusammenfassung**

Bei der Herstellung eines Spritzgussteils, dessen Oberfläche mindestens teilweise von einem Verkleidungsstück (7) aus beschrifteter, gefärbter, bebilderter oder sonst markierter Polyolefinfolie gebildet wird, wird ein Folienabschnitt (17) an Seitenstreifen (15, 19), welche auf eine Abziehrolle (14) gewickelt werden und deren einer als Vorderstreifen (19) die einem Anspritzpunkt zugewandte Vorderkante des Verkleidungsstücks (7) abdeckt, in die Spritzgussform gezogen und beim Einspritzen dort festgehalten.

Der Folienabschnitt kann auch in eine Vertiefung eingelegt werden, sodass seine Vorderkante durch eine dem nächstgelegenen Anspritzpunkt abgewandten Stufe abgedeckt wird.

In beiden Fällen wird ein Verschieben oder Unterspülen des Verkleidungsstücks (7) verhindert.

## Beschreibung

Die Erfindung betrifft ein Verfahren zur Herstellung von Spritzgussteilen gemäss dem Oberbegriff des Anspruchs 1 sowie Vorrichtungen zur Durchführung des Verfahrens.

Es sind gattungsgemässe Verfahren bekannt zur Herstellung kleiner Spritzgussteile wie konischer Becher für pastöse Lebensmittel wie Yoghurt und kleinere Schalen mit nach oben auseinanderlaufenden Wänden, welche ebenfalls zur Aufbewahrung und zum Transport von Lebensmitteln eingesetzt werden. Die verwendeten Folien sind gewöhnlich farbig bedruckt oder beschriftet. Das Verfahren dient vor allem dazu, die Spritzgussteile äusserlich attraktiver zu gestalten, ohne dass sie bedruckt werden müssten. Das Bedrucken ist nämlich mit Nachteilen verbunden, die zunehmend weniger akzeptabel sind. Bei Offsetdruck befriedigt die Qualität nicht, vor allem sind die Farben eher blass und der Aufdruck nicht kratzfest ist, während beim Siebdruck mit umweltbelastenden Lösungsmitteln gearbeitet werden muss, da wasserlösliche Farben nicht resistent, vor allem ebenfalls nicht kratzfest genug sind.

Diese Probleme stellen sich verschärft bei grossen Spritzgussteilen wie Eimern, Flaschenkästen, Transportkästen für Gemüse, Obst und anderes und Paletten. Umso schwerer wiegt es, dass das Problem, gattungsgemässe Verfahren auf derartige Teile auszudehnen, bisher nicht befriedigend gelöst werden konnte. Während etwa bei Bechern die Folie auf den Kern gewickelt und die Spritzgussmasse dann zwischen Folie und Kern gespritzt werden kann, sodass eine einstückige Verkleidung für die gesamte Aussenseite des Bechers entsteht, ist dieses Verfahren bei grossen Spritzgussteilen, insbesondere solchen mit komplizierter Form nicht anwendbar.

Es ist dort unumgänglich, dass z. B. für die Verkleidung der Seitenwände ein Verkleidungsstück oder auch mehrere davon eingesetzt werden, welche nicht praktisch die gesamte Aussenseite umhüllen. Dies führt dazu, dass bei direkter Uebernahme der für kleine Spritzgussteile entwickelten Methode gewöhnlich mindestens eine einem Einspritzpunkt zugewandte Vorderkante des Verkleidungsstücks, das vor dem Einspritzen in die Form eingebracht wurde, der Strömung der Spritzgussmasse beim Einspritzen eine Angriffsfläche bietet, was dazu führt, dass das Verkleidungsstück, selbst wenn es durch Unterdruck oder andere Methoden an einer Innenfläche der Form festgehalten wird, verschoben wird oder auch abgehoben, sodass Spritzgussmasse zwischen dasselbe und die Innenfläche der Spritzgussform dringt. Besonders deutlich tritt dieses Problem bei senkrechten Seitenwänden in Erscheinung, welche jedoch bei vielen Spritzgussteilen, z. B. bei Flaschenkästen, unvermeidlich sind.

Der Erfindung liegt die Aufgabe zugrunde, bekannte gattungsgemässe Verfahren für die Herstellung grösserer, weitgehend beliebig geformter Spritzgussteile tauglich zu machen. Ausserdem sollen zur Durchführung verschiedener Ausgestaltungen des erfindungsgemässen Verfahrens geeignete Vorrichtungen angegeben werden.

Diese Aufgabe wird durch die Erfindung, wie sie in den Ansprüchen gekennzeichnet ist, gelöst. Durch die Erfindung werden zugleich in ästhetischer und in ökologischer Hinsicht weitreichende Verbesserungen ermöglicht. So wird für Beschriftungen und Bebilderungen der Spritzgussteile ein weites Feld von Möglichkeiten eröffnet. Offsetdruck und Siebdruck mit wasserlöslichen Farben (Dispersionen) bis zum Vierfarbendruck sind möglich, da die Farben auf der Rückseite der Folie oder zwischen zwei Schichten derselben angebracht sein können und damit gegen mechanische und chemische Einwirkungen geschützt sind. Es ist auch möglich, wenigstens die beim Gebrauch normalerweise sichtbaren Flächen des Spritzgussteils praktisch vollständig zu überziehen, so dass sich die Farbe der Spritzgussmasse auf das Erscheinungsbild des Spritzgussteils nicht oder wenig auswirkt.

Dies ermöglicht es, auf eine Färbung der Spritzgussmasse zu verzichten und vor allem, auch Massen zu verwenden, die einen unansehnlichen, schwer oder gar nicht überfärbbaren Farbton aufweisen. Letzteres ist vor allem bei sogenanntem Regenerat der Fall, welches aus ausgesonderten, zerkleinerten und eingeschmolzenen Spritzgussteilen besteht und meist einen zwischen beige, grau, braun und schwarz changierenden Farbton zeigt. Regenerat wurde daher aus ästhetischen Gründen nicht gern verwendet. Wird es von Verkleidungsstücken aus Folie bedeckt, welche beliebig eingefärbt, beschriftet und bebildert sein können, so steht seiner Verwendung, die einen grossen Beitrag zur Abfallverminderung und Ressourcenschonung leisten kann, nichts mehr im Wege.

Das erfindungsgemässe Verfahren leistet diesbezüglich noch einen weiteren Beitrag, indem es bei Verwendung sehr zugfesten Folienmaterials eine dünner Ausbildung von Wänden, Pfeilern etc. erlaubt, als das ohne Verwendung von Folie möglich wäre und damit nicht unbeträchtliche Materialeinsparungen ermöglicht.

Ausser Beschriftung und Bebilderung ermöglicht das erfindungsgemässe Verfahren auch eine bequeme Kennzeichnung von Behältern durch einen Code, welcher Aufschluss über das Herstellungsdatum und andere Punkte gibt. Dies ist vor allem bei Mehrwegsysteme wie dem IFCO-Container-System oder dem MTS-System erwünscht. Vor allem im Kontext solcher Systeme ist es unter Umständen sinnvoll, die verwendeten Spritzgussteile mit einer Marke zu versehen, welche eine Fälschung erschwert, wie einem Hologramm oder Kinegramm. Auch solche Marken können auf einer Folie leicht angebracht und mit derselben auf das Spritzgussteil aufgebracht werden.

Im folgenden wird die Erfindung anhand von Zeichnungen, welche nur Ausführungsbeispiele darstellen, näher erläutert. Es zeigen
- Fig. 1: in einem vertikalen Schnitt eine Spritzgussform zur Durchführung des erfindungsgemässen Verfahrens nach einer ersten Ausführungsform,
- Fig. 2: in einem vertikalen Schnitt einen Teil einer weiteren Spritzgussform zur Durchführung des erfindungsgemässen Verfahrens nach der ersten Ausführungsform,
- Fig. 3: in einem vertikalen Schnitt eine Spritzgussform zur Durchführung des erfindungsgemässen Verfahrens nach einer zweiten Ausführungsform,
- Fig. 4a: in einem horizontalen Schnitt eine Spritzgussform zur Durchführung des Verfahrens nach einer dritten Ausführungsform einschliesslich eines Spritzgussteils,
- Fig. 4b: einen Schnitt durch die Spritzgussform nach Fig. 4a längs der Linie B-B,
- Fig. 5: einen nach dem erfindungsgemässen Verfahren hergestellten Flaschenkasten,
- Fig. 6: einen weiteren nach dem erfindungsgemässen Verfahren hergestellten Flaschenkasten,
- Fig. 7: einen nach dem erfindungsgemässen Verfahren hergestellten Eimer,
- Fig. 8: einen weiteren nach dem erfindungsgemässen Verfahren hergestellten Eimer,
- Fig. 9: einen mehrteiligen Transportbehälter mit nach dem erfindungsgemässen Verfahren hergestellten Teilen,
- Fig. 10: einen nach dem erfindungsgemässen Verfahren hergestellten Gemüsebehälter und
- Fig. 11: einen nach dem erfindungsgemässen Verfahren hergestellten Deckel.

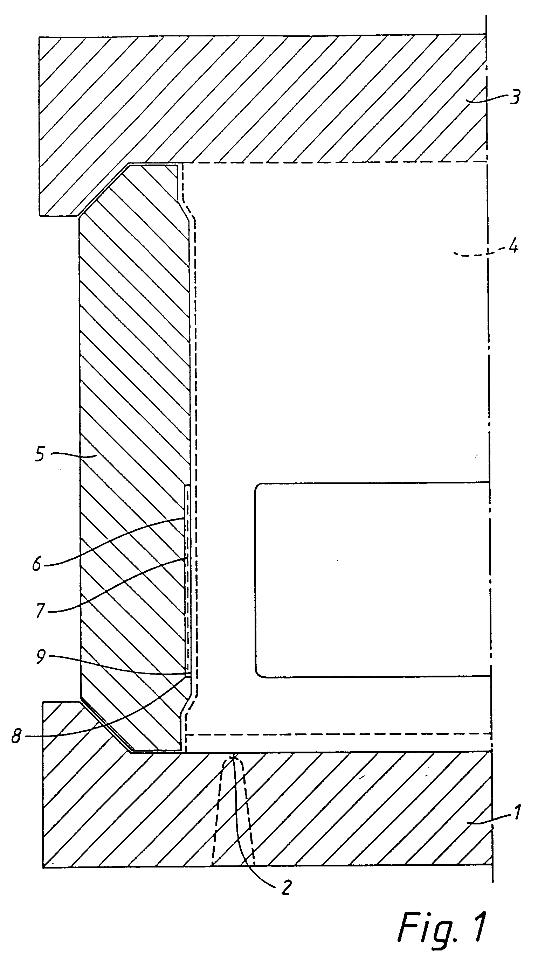

Fig. 1 zeigt eine Spritzgussform mit einer Bodenplatte 1, in welchem mehrere Anspritzpunkte 2 (nur einer angedeutet) angeordnet sind mit Zuleitungen von einem nicht dargestellten konventionellen Spritzaggregat her, einer Deckplatte 3 mit einem Kern 4 (nur angedeutet) sowie Seitenplatten 5. In den senkrechten Innenflächen der Seitenplatten 5 sind jeweils von einer umlaufenden Stufe begrenzte flache Vertiefungen 6 angebracht. Die Bodenplatte 1 und die Seitenplatten 5 bilden die Matrize der Spritzgussform.

Zur Herstellung eines Spritzgussteils wird der Kern 4 aus der Matrize genommen und in die Vertiefungen 6 genau passende Verkleidungsstücke 7 (gestrichelt) eingelegt. Das Einlegen kann mittels eines Automaten geschehen, welcher die Verkleidungsstücke 7 von einem Stapel nimmt, indem er sie mit einem mit Saugnäpfen ausgerüsteten Greifarm aufnimmt und der sie dann in die Vertiefungen 6 einlegt. Sie können durch Unterdruck, durch elektrostatische Aufladung gegenüber den Seitenplatten 5 oder auch durch ein Magnetfeld, wenn sie ein auf Magnetfelder ansprechendes Material enthalten, dort festgehalten werden. Die Verkleidungsstücke 7 sind als Folienabschnitte, vorzugsweise aus Polyolefinen, ausgebildet und ca. 100µ dick. Sie können, vorzugsweise auf der Rückseite oder zwischen zwei Schichten, eingefärbt, beschriftet, im Offset- oder Dispersionssiebdruck bebildert, mit Kennzeichnungen und zur Fälschungssicherung auch mit Hologrammen oder Kinegrammen versehen sein. Die Tiefe der Vertiefungen 6 ist vorzugsweise etwas grösser als die Dicke der Verkleidungsstücke 7.

Anschliessend wird durch die Anspritzpunkte 2 eine konventionelle Kunststoff-Spritzgussmasse eingespritzt, deren Temperatur im Erweichungsbereich der Folie liegt. Die Spritzgussmasse strömt in den Raum zwischen Matrize und Kern 4 und füllt ihn aus. Die Verkleidungsstücke 7 werden oberflächlich angeschmolzen und verbinden sich mit der Spritzgussmasse, sodass sie sehr gut haften. Nach der Verfestigung der Spritzgussmasse wird die Spritzgussform geöffnet und das Spritzgussteil ausgestossen. Die Verkleidungsstücke 7 sind innenseitig fest mit demselben verbunden, während ihre Aussenseiten Teile seiner Oberfläche bilden.

Die Vertiefungen 6, insbesondere die einem Anspritzpunkt 2 zugewandten Vorderseiten, die vom Anspritzpunkt abgewandte Stufen 8 darstellen, haben die wichtige Aufgabe, den Folienabschnitt beim Einspritzen davor zu schützen, dass er von der einströmenden Spritzgussmasse mitgerissen wird. Es hat sich nämlich erwiesen, dass dazu eine Fixierung der Verkleidungsstücke 7 an den Seitenplatten 5 durch die oben beschriebenen Methoden wie Unterdruck allein bei grösseren Spritzgussteilen nicht genügt. Die Verkleidungsstücke 7 bieten mit der einem der Anspritzpunkte 2 zugewandten Vorderkante 9 jeweils eine verhältnismässig grosse Angriffsfläche für die einströmende Spritzgussmasse, sodass sie von derselben verschoben oder unterspült würden, wenn besagte Vorderkante 9 nicht durch die Stufe 8 abgedeckt würde. Die Stufe 8 bewirkt jedoch, dass das Verkleidungsstück 7 an Ort und Stelle bleibt und am fertigen Spritzgussteil genau an der vorgesehenen Stelle sitzt.

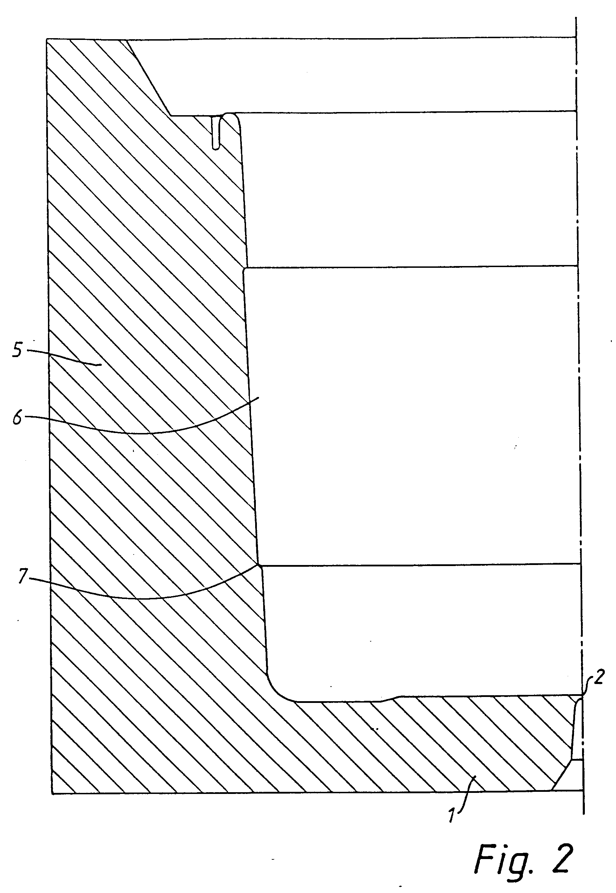

Fig. 2 zeigt eine Matrize einer Spritzgussform mit einem Boden 1 mit einem mittleren Anspritzpunkt 2. An der Innenfläche einer Seitenwand 5, welche direkt in den Boden 1 übergeht, ist eine umlaufende Vertiefung 6 angebracht, die der Aufnahme eines streifenförmigen Verkleidungsstücks dient, welche dann einen das fertige Spritzgussteil umgebenden Streifen bildet. Auch hier ist, obwohl das Problem durch die konisch auseinanderlaufende Wand 5 geringfügig entschärft ist, die dem Anspritzpunkt 2 zunächst liegende Stufe 7 am Rand der Vertiefung 6 wesentlich, da sonst das Verkleidungsstück beim Einströmen der Spritzgussmasse verschoben würde.

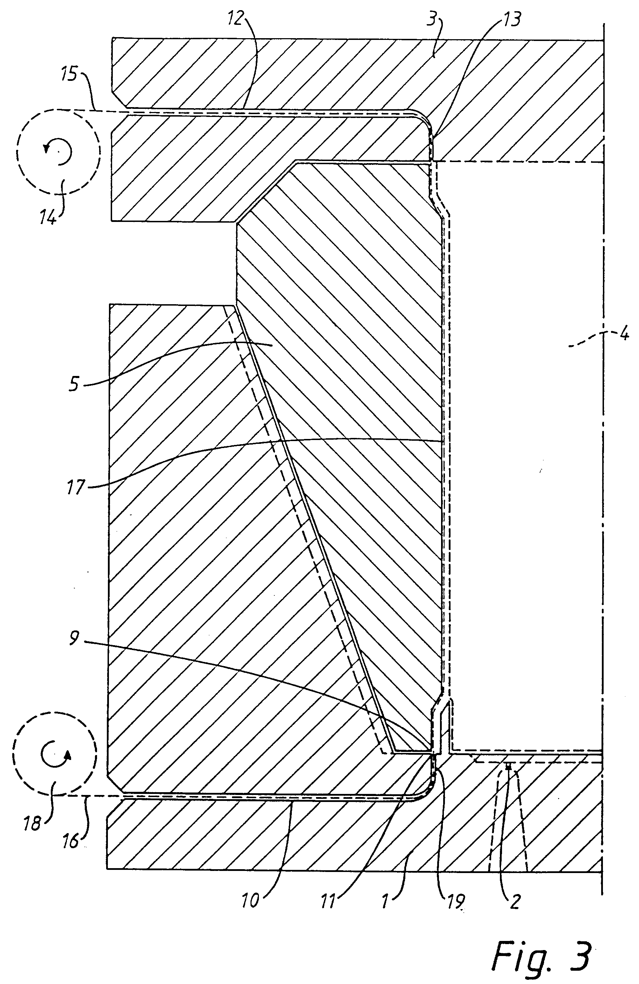

Fig. 3 zeigt wiederum eine Spritzgussform mit einer Bodenplatte 1 mit Anspritzpunkten 2 und einer Deckplatte 3, welche einen Kern 4 trägt. Eine Seitenplatte 5 ist geringfügig nach aussen, d. h. vom Kern 4 weg verschiebbar. In der Bodenplatte 1 liegt ein Zuführspalt 10, welcher in einen zwischen der Bodenplatte 1 und der Seitenplatte 5 gebildeten Zuführschlitz 11 in der Innenfläche der Spritzgussform mündet sowie ein Abziehspalt 12, welcher in einen Abziehschlitz 13 mündet.

Vor dem Einspritzen wird die Seitenplatte 5 leicht nach aussen gezogen. Durch Zug einer antreibbaren Abziehrolle 14, welche Seitenstreifen 15 eines Folienbandes 16 aufwickelt, wird ein neuer Folienabschnitt 17 in das Innere der Spritzgussform gezogen, wobei Folienband 16 von einer Vorratsrolle 18 abgezogen wird und liegt an der Innenfläche der Seitenplatte 5 an. Anschliessend wird die Seitenplatte 5 wieder nach innen gedrückt und mindestens an der Zuführseite zwischen der Bodenplatte 1 und der Seitenplatte 5 geklemmt. Anschliessend wird Spritzgussmasse eingespritzt. Da der Folienabschnitt 17 durch das Klemmen im Zuführschlitz 11 eines anschliessenden Vorderstreifens 19, welcher also nicht innerhalb der Spritzgussform liegt und daher mit der Spritzgussmasse nicht in Berührung kommt, besteht keine Gefahr, dass der Folienabschnitt 17 durch die Strömung der Spritzgussmasse verschoben oder unterspült würde.

Ein zwischen den Seitenstreifen 15 liegender Mittelstreifen des Folienbandes 16 (hier nicht ersichtlich), verschmilzt, soweit er innerhalb der Spritzgussform liegt, mit der Spritzgussmasse und bildet ein Verkleidungsstück, welches unmittelbar an den festgehaltenen Vorderstreifen 19 anschliesst und dessen Vorderkante 9 daher durch denselben gedeckt wird, während die seitlich anschliessenden Seitenstreifen 15 mit Silikon beschichtet sind, sodass die Spritzgussmasse nicht an ihnen haftet. Beim Ausstossen des Spritzgussteils wird das Verkleidungsstück zwischen den Seitenstreifen 15 herausgerissen, da es am Spritzgussteil haftet. Die Seitenstreifen 15 werden jedoch nicht unterbrochen, sodass nach einem Zurückschieben der Seitenplatte 5 durch Zug an denselben ein neuer Folienabschnitt 17 in das Innere der Spritzgussform gezogen werden kann.

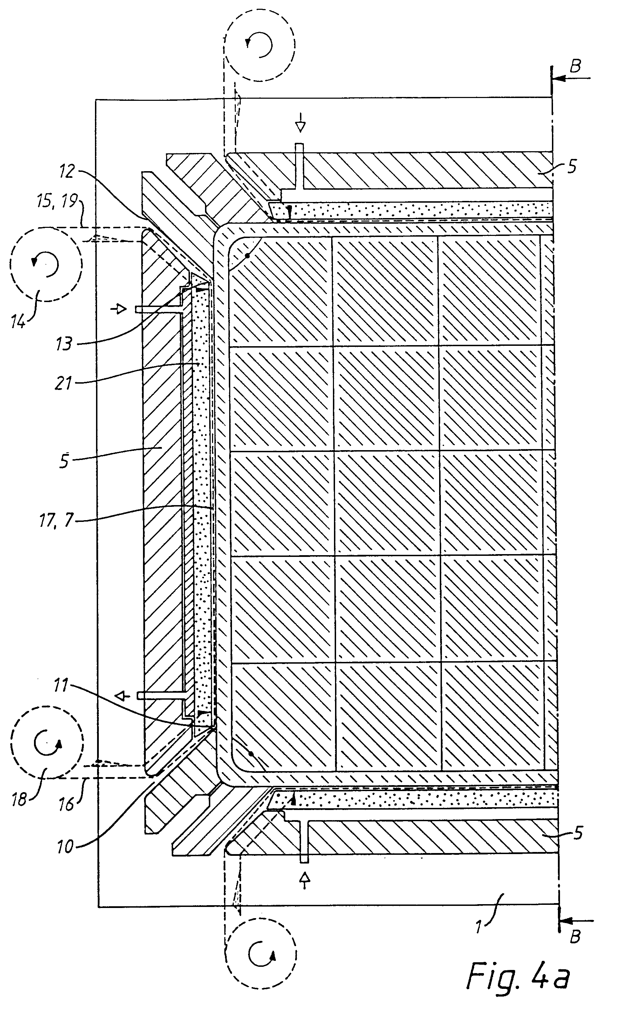

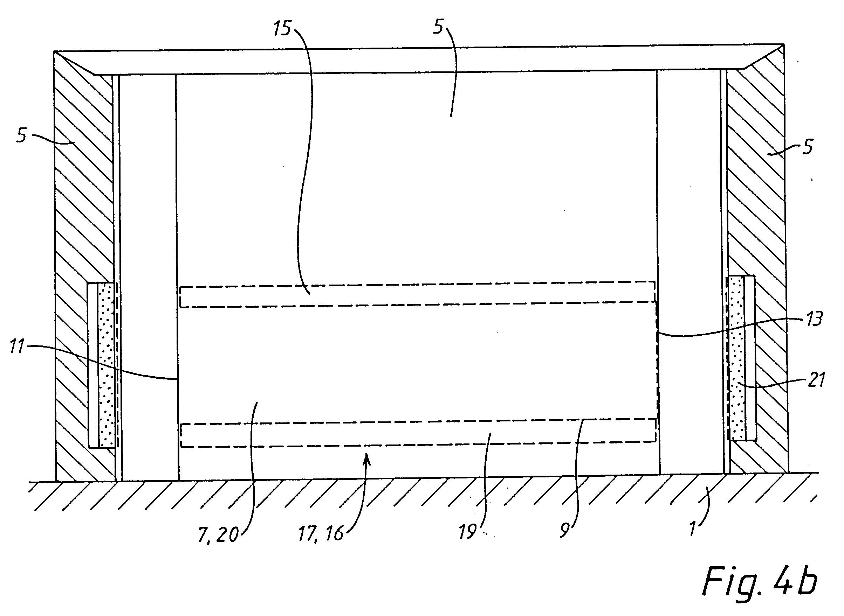

Deutlicher gehen einige Aspekte des Ablaufs aus den Fig. 4a,b hervor, aus denen eine andere, aber in wesentlichen Zügen ähnliche Ausführungsform des erfindungsgemässen Verfahrens ersichtlich ist. Hier werden Folienbänder 16 nicht vertikal, sondern horizontal verschoben, sodass einer der Seitenstreifen einen Vorderstreifen 19 bildet, welcher dem Mittelstreifen 20, dessen in der Spritzgussform liegender Abschnitt wiederum ein Verkleidungsstück 7 bildet, gegen die in der Bodenplatte 1 angebrachten Anspritzpunkte 2 hin vorgelagert ist und so seine Vorderkante 9 abdeckt. Der Vorderstreifen 19 wird, ebenso wie der obere Seitenstreifen 15, seitlich in einem Zuführschlitz 11 und einem Abziehschlitz 13 leicht geklemmt, während der Mittelbereich der Schlitze vollständig schliesst, sodass der Mittelstreifen 20 im Zuführschlitz 11 abgeklemmt und vom noch im Zuführspalt 10 liegenden Teil desselben getrennt wird. Dadurch wird die Gefahr eines Losreissens des Verkleidungsstücks 7 beim Ausstossen des Spritzgussteils vermindert. Der Vorderstreifen 19 und der weitere Seitenstreifen 15 sind wiederum auf der der Innenfläche der Seitenplatte 5 abgewandten Seite mit Silikon beschichtet, sodass sie sich nicht mit der Spritzgussmasse verbinden.

Der in der Spritzgussform liegende Folienabschnitt 17 wird jeweils ausserdem dadurch an der Seitenplatte 5 fixiert, dass in dieselbe dort eine Ansaugplatte 21 eingelassen ist, welche aus porösem, luftdurchlässigem metallischem Material, z. B. aus einer porösen Aluminiumlegierung besteht, an deren Rückseite von einer nicht dargestellten Saugpumpe Luft abgesaugt wird. Dadurch wird zwischen dem Folienabschnitt 17 und der Ansaugplatte 21 ein Vakuum erzeugt, welches den ersteren zusätzlich festhält. Nach dem Einspritzen wird wieder Luft (Pfeil) eingelassen und anschliessend das Spritzgussteil 22, das in Fig. 4a, aber nicht in Fig. 4b dargestellt ist, ausgestossen.

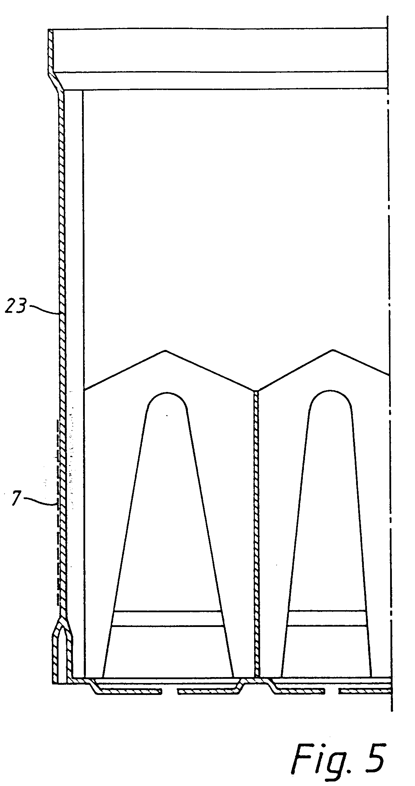

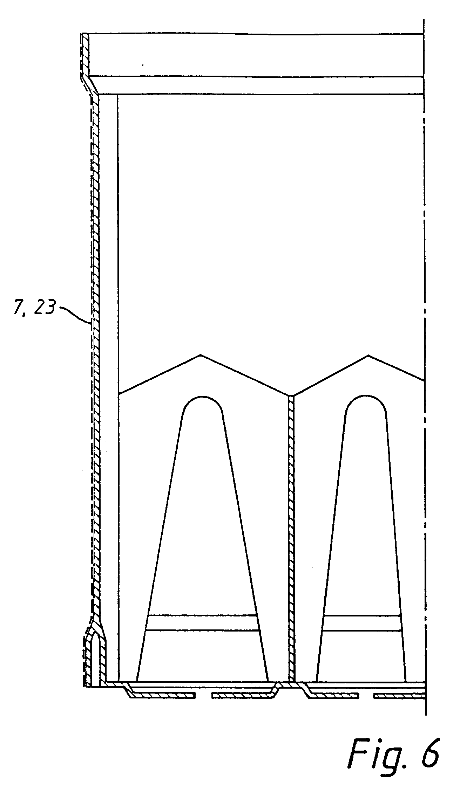

Fig. 5 zeigt einen Flaschenkasten, welcher ein Verkleidungsstück 7 trägt, dessen Aussenseite einen Teil einer senkrechten Seitenfläche 23 bildet. Bei dem in Fig. 6 dargestellten Flaschenkasten ist die gesamte Seitenfläche 23 von einem Verkleidungsstück 7 bedeckt.

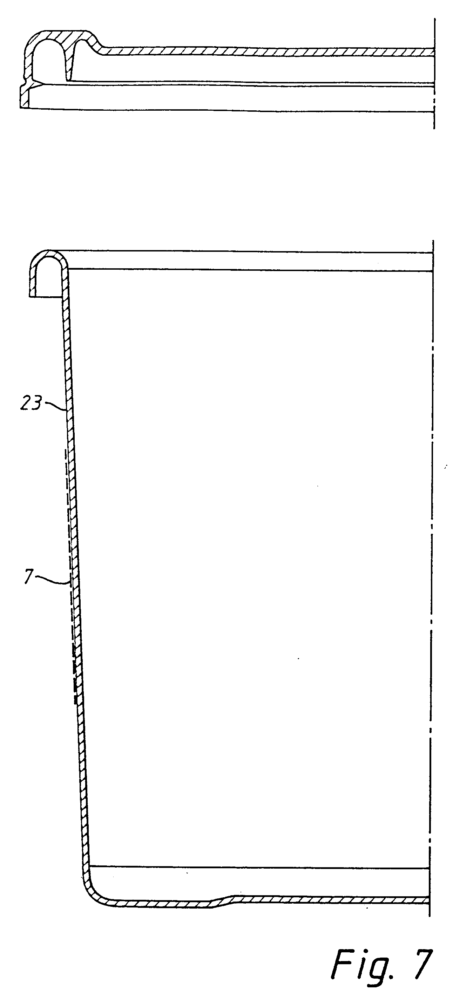

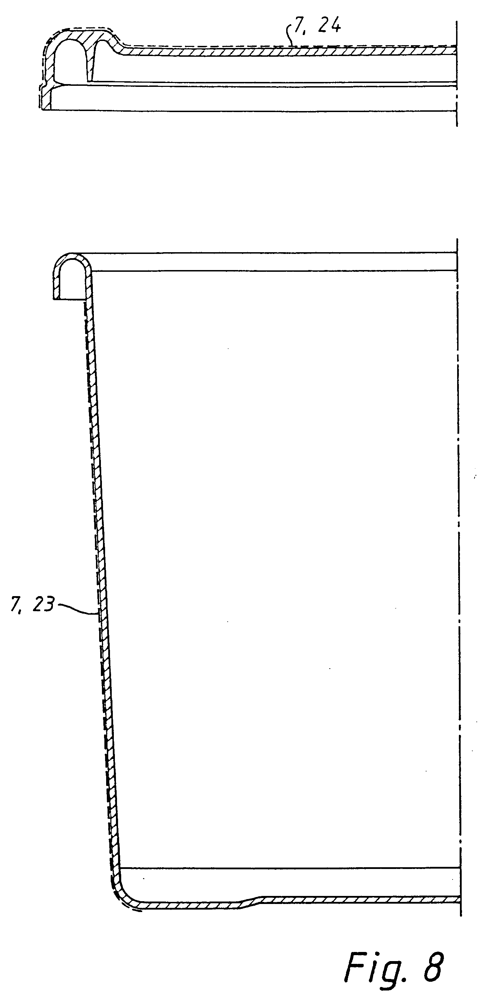

Fig. 7 zeigt einen Eimer mit einem Verkleidungsstück 7, das als umlaufender Streifen an seiner Seitenfläche 23 ausgebildet ist. Beim in Fig. 8 dargestellten Eimer ist dagegen die gesamte Seitenfläche 23, ebenso wie die Oberseite 24 eines Deckels überzogen.

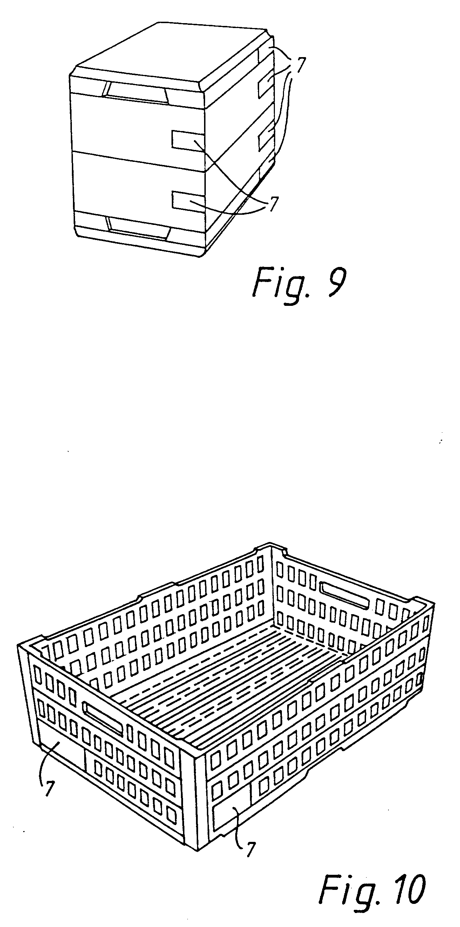

Fig. 9 zeigt einen aus mehreren Spritzgussteilen bestehenden Behälter. Jeder der Spritzgussteile weist ein verhältnismässig kleines Verkleidungsstück 7 auf, welches einen Code trägt, aus welchem z. B. das Datum ableitbar ist, an welchem der Behälter in Umlauf gesetzt wurde. Codes, z. B. solche, die die Anzahl Umläufe markieren, können auch durch Einbrennen mit einem Laser geändert werden.

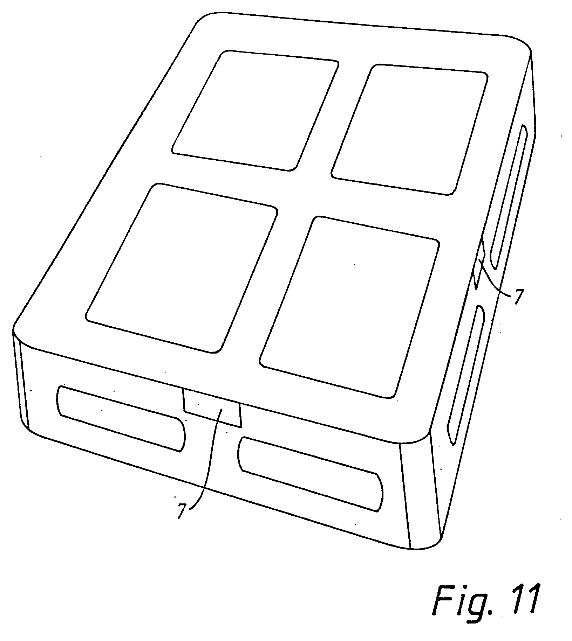

Fig. 10 zeigt einen Gemüsebehälter und Fig. 11 einen Deckel, welche ebenfalls jeweils mehrere kleine Verkleidungsstücke 7 für Markierungen tragen.

## Patentansprüche

1. Verfahren zur Herstellung eines Spritzgussteils aus Kunststoff, bei welchem mindestens ein Teil der Oberfläche durch die Aussenseite eines innenseitig mit dem Spritzgussteil verbundenen Verkleidungsstücks (7) aus Folie gebildet wird, durch Einbringen mindestens eines Folienabschnitts (17) in eine Spritzgussform, Schliessen derselben und Einspritzen von Spritzgussmasse an einem oder mehreren Anspritzpunkten (2), **dadurch gekennzeichnet, dass** der Folienabschnitt (17) derart in die Spritzgussform eingebracht wird, dass beim Einspritzen die einem Anspritzpunkt (2) zugewandte Vorderkante (9) des Verkleidungsstücks (7) abgedeckt ist.

2. Verfahren nach Anspruch 1, **dadurch gekennzeichnet, dass** die Vorderkante (9) mindestens zum Teil durch eine Seitenkante des Folienabschnitts (17) gebildet wird und dass derselbe derart in die Spritzgussform eingelegt wird, dass die Vorderkante (9) hinter einer dem Anspritzpunkt (2) abgewandten Stufe (8) an der Innenfläche der Spritzgussform liegt.

3. Verfahren nach Anspruch 2, **dadurch gekennzeichnet, dass** das Verkleidungsstück (7) den gesamten Folienabschnitt (17) umfasst und in eine kongruente Vertiefung (6) an der Innenfläche der Spritzgussform eingelegt wird.

4. Verfahren nach Anspruch 1, **dadurch gekennzeichnet, dass** mindestens an einen Teil der Vorderkante (9) ein Vorderstreifen (19) anschliesst, welcher mit der Spritzgussmasse keine Verbindung eingeht und dass derselben beim Einspritzen an der Spritzgussform festgehalten wird.

5. Verfahren nach Anspruch 4, **dadurch gekennzeichnet, dass** das Festhalten des Vorderstreifens (19) durch Klemmen desselben zwischen Formteilen bewerkstelligt wird.

6. Verfahren nach Anspruch 4 oder 5, **dadurch gekennzeichnet, dass** der Folienabschnitt (17) ein Abschnitt eines Folienbandes (16) ist mit einem Mittelstreifen (20) und zwei Seitenstreifen (15; 19), welche mit der Spritzgussmasse keine Verbindung eingehen, während aus dem Mittelstreifen (20) jeweils das Verkleidungsstück (7) entnommen wird und dass das Einbringen eines Folienabschnitts (17) jeweils durch Zug an den aus der Form herausgeführten Seitenstreifen (15; 19) bewirkt wird.

7. Verfahren nach Anspruch 6, **dadurch gekennzeichnet, dass** einer der Seitenstreifen den Vorderstreifen (19) des Folienabschnitts bildet.

8. Verfahren nach Anspruch 6 oder 7, **dadurch gekennzeichnet, dass** nach dem Einbringen eines Folienabschnitts (17) der Mittelstreifen (20) an den Rändern des Folienabschnitts (17) abgeklemmt wird.

9. Verfahren nach einem der Ansprüche 1 bis 8, **dadurch gekennzeichnet, dass** mindestens das Verkleidungsstück (7) während des Einspritzens ganzflächig an einer Innenfläche der Spritzgussform festgehalten wird.

10. Verfahren nach Anspruch 9, **dadurch gekennzeichnet, dass** das Festhalten des Verkleidungsstücks (7) durch Erzeugen von Unterdruck zwischen der Aussenfläche des Folienabschnitts (17) und der Innenfläche der Spritzgussform bewirkt wird.

11. Verfahren nach Anspruch 9, **dadurch gekennzeichnet, dass** das Festhalten des Verkleidungsstücks (7) durch elektrostatische Aufladung desselben gegenüber der Innenfläche der Spritzgussform bewirkt wird.

12. Verfahren nach Anspruch 9, **dadurch gekennzeichnet, dass** das Verkleidungsstück (7) ferromagnetisches Material enthält und das Festhalten desselben durch Anlegen eines Magnetfelds bewirkt wird.

13. Verfahren nach einem der Ansprüche 1 bis 12, **dadurch gekennzeichnet, dass** die Temperatur der eingespritzten Spritzgussmasse im Erweichungsbereich des Materials des Verkleidungsstücks (7) liegt.

14. Verfahren nach einem der Ansprüche 1 bis 13**, dadurch gekennzeichnet, dass** das Verkleidungsstück (7) mindestens an einem Teil seiner Fläche optisch aktiv ist.

15. Verfahren nach einem der Ansprüche 1 bis 14, **dadurch gekennzeichnet, dass** das Verkleidungsstück (7) im wesentlichen aus Polyolefinen besteht.

16. Verfahren nach einem der Ansprüche 1 bis 15, **dadurch gekennzeichnet, dass** die Spritzgussmasse ein Regenerat ist.

17. Vorrichtung zur Durchführung des Verfahrens nach Anspruch 2, mit einer Spritzgussform, einem Spritzaggregat und einem Einlegeautomaten, **dadurch gekennzeichnet, dass** mindestens eine Innenfläche der Spritzgussform eine einem Anspritzpunkt (2) abgewandte Stufe (8) aufweist.

18. Vorrichtung nach Anspruch 17, **dadurch gekennzeichnet, dass** mindestens eine Innenfläche der Spritzgussform eine von einer umlaufenden Stufe begrenzte Vertiefung (6) aufweist.

19. Vorrichtung zur Durchführung des Verfahrens nach Anspruch 5, mit einer Spritzgussform mit einer Matrize und einem Kern (4) sowie mit einem Spritzaggregat und einem Einlegeautomaten, **dadurch gekennzeichnet, dass** die Matrize oder der Kern (4) mindestens eine bewegliche Wand umfasst, welche mindestens an einer einem Anspritzpunkt (2) zugewandten Seite mit einem weiteren Teil der Matrize oder des Kerns (4) einen schliessbaren Spalt bildet.

20. Vorrichtung zur Durchführung des Verfahrens nach Anspruch 6, mit einer Spritzgussform mit einer Matrize und einem Kern (4) sowie mit einem Spritzaggregat und einem Einlegeautomaten, **dadurch gekennzeichnet, dass** die Matrize oder der Kern (4) mindestens eine Seitenwand aufweist mit einem Zuführschlitz (10) sowie einem Abziehschlitz (12) oder einem Paar von Abziehschlitzen und der Einlegeautomat eine antreibbare Abziehvorrichtung umfasst.

21. Vorrichtung nach Anspruch 20, **dadurch gekennzeichnet, dass** der Zuführschlitz (10) zwischen einer beweglichen Wand und mindestens einem weiteren Teil der Matrize oder des Kerns (4) gebildet und an einem Mittelabschnitt schliessbar ist.

22. Vorrichtung nach einem der Ansprüche 17 bis 21, **dadurch gekennzeichnet, dass** sie eine Saugpumpe umfasst, welche mit Saugschlitzen oder Saugporen an jenen Teilen der Innenfläche der Spritzgussform, an denen beim Einspritzen das Verkleidungsstück (7) anliegt, verbunden ist.
